# EUROPEAN PATENT APPLICATION

(11) **EP 4 799 797 A1**
(43) Date of publication of application: **02.09.2026**
(21) Application number: 25160387.4
(22) Date of filing: 26.02.2025
(51) Int. Cl.: B29C 64/386, B33Y 10/00, B33Y 30/00, B33Y 50/00

(54) **METHOD OF GENERATING CONTROL DATA FOR A PRINTER DEVICE, METHOD OF CONTROLLING A PRINTER DEVICE, CONTROL DEVICE, PRINTER DEVICE, COMPUTER PROGRAM PRODUCT AND COMPUTER-READABLE STORAGE MEDIUM**

(71) Applicant: Siemens Healthineers AG, 91301 Forchheim (DE); Stratasys Ltd., 7612401 Rehovot (IL)
(72) Inventor: Allmendinger, Thomas, 91301 Forchheim (DE); Popescu, Stefan, 91056 Erlangen (DE); Bitan, Ido, 6019000 Yehud-Monosson (IL); Reina, Reut, 7420901 Ness Ziona (IL)
(74) Representative: Hofstetter, Schurack & Partner

(57) **Abstract**

The invention relates to a method of generating control data for a printer device (12) to generate a phantom object (14) of a source object, comprising the following steps performed by a control device (10): receiving a parameter map of the source object, the parameter map comprising input voxels, each input voxel being assigned a respective input parameter value; generating a parameter map of the phantom object (14) based on the parameter map of the source object; generating a printing map of the phantom object (14), the printing map of the phantom object (14) comprising the output voxels (20), each output voxel (20) being assigned a respective printing material to be applied by the printer device (12); generating control data for the printer device (12) to print the phantom object (14) using the printing materials according to the printing map.

## Description

The present invention relates to a method of generating control data for a printer device to generate a phantom object of the source object, a method of controlling a printer device to print a phantom object of a source object, a control device configured to provide control data for a printer device to generate a phantom object of a source object, a printer device comprising a control device, a computer program as well as a computer readable memory device.

Three-dimensional (3D) printing based on different techniques is an established technical solution. This also includes printing of anatomical models derived from parameter or MR images of a source object. These anatomical models are also called phantom objects. The primary purpose of these phantom objects is of a mechanical nature representing the physical properties of the source object.

The primary existing solution is based on a segmentation approach, which relies on the fact that different anatomical compartments like bone skull, vascular vessel tree can be isolated segmented and transferred into a file for the printer device. Each segmented compartment is assigned to a single printer material before realization. However, this approach falls short in the case of structures, which are too small for segmentation like small vessels or inner ear bone or structures that exhibit too little contrast for reliable segmentation. An example of structures of little contrast is a contrast between gray brain tissue and white brain tissue. An alternative approach is the direct map of individual voxels of the original parameter/MR image into the individual material voxels of the printer.

Document WO 2013 / 072874 A1 describes a system and a corresponding method for fabricating a body part model using multi-material additive manufacturing.

Document WO 2020 / 141519 A1 describes an additive manufacturing of radiological phantoms.

However the actual description for this map process is limited and generic referring to a lookup table process.

It is an object of the present invention to provide a solution that allows provision of a printing map for generating a phantom object of a source object.

This objective is achieved by the respective subject matter of the independent claims. Further implementations and preferred embodiments are subject matter of the dependent claims.

A first aspect of the present invention relates to a method of providing control data for a printer device to produce a phantom object of a source object. In other words, the method relates to generating control data for controlling the printer device to produce the phantom object. The phantom object is a three-dimensional object representing the source object. The phantom object may be used to model the source object.

The present aspect describes steps and a process for mapping input parameter of a CT parameter map or an MRI parameter map of the source object into a representation, which allows the generation of a phantom object that, if imaged by a CT device or an MRI device again yields a same parameter map in terms of reconstructed sharpness, noise structure and HU values as the original clinical input images for the same acquisition parameters (e.g. tube voltage).

The method comprises the following steps that are performed by a control device. The control device may be integrated in the printer device or external to the printer device.

A first step of the method comprises receiving a parameter map of the source object. The parameter map comprises input voxels, each input voxel being associated with a respective input parameter value. In other words, the parameter map of the source object is provided to the control device. The parameter map describes a spatial distribution of the input parameter values of the input parameter. The input parameter values are given at the respective input voxels of the parameter map. The parameter map may be generated using a computed-tomography device or a magnetic resonance tomography device. The input parameter may be the Hounsfield unit.

A next step comprises generating a parameter map of the phantom object based on the parameter map of the source object. The parameter map of the phantom object comprises output voxels, each of which is assigned a respective output parameter value. In other words, in a next step, the parameter map describing the source object is used by the control device to generate the parameter map of the phantom object. The parameter map of the phantom object comprises the output voxels to which the respective output parameter value is assigned. The parameter map of the phantom object may be restricted to a particular region of the parameter map of the source object. It is possible that a spatial resolution of the parameter map of the phantom object is different from a spatial resolution of the parameter map of the source object. The output voxels may be identical or different to the corresponding input voxels of the parameter map of the source object. The output parameter may be identical to the input parameter. In other words, both parameters may be the Hounsfield units. It may also be possible, that the output parameter is different from the input parameter. As an example, the input parameter may be the Hounsfield unit, wherein the output parameter may be a T2 time. The respective output parameter values may be the same as or different from the respective input parameter values. When a grid of the output voxels is different from a grid of the input voxels, the output parameter values of the output voxels may be determined by interpolating the input parameter values of the input voxels.

A next step comprises generating a printing map of the phantom object. The printing map of the phantom object comprises the output voxels, wherein each of the output voxels is assigned a respective printing material to be applied by the printing device in a printing procedure. In other words, the next step is to generate the printing map of the phantom object. The printing map of the phantom object is based on the parameter map of the phantom object. The printing map has a same spatial resolution as the parameter map of the phantom object, in which each of the output voxels is assigned the respective printing material. The printing map is a distribution of the printing material for generating the phantom object by the printing device.

The respective printing material is assigned to the respective output voxel according to a probabilistic procedure based on the output parameter value of the corresponding output voxel in the parameter map of the phantom object and a probability list which describes probabilities of the assignment of the respective printing materials to the respective parameter output value. In other words, the printing map of the phantom object is generated based on the parameter map of the phantom object and the probability list. The probability list assigns to each of the output parameter values respective probabilities of an assignment of the respective print materials to the respective output voxel of the respective output parameter value. The printing material is assigned to the respective output voxel according to the probabilistic procedure. The assignment is made on the basis of the probability list. Therefore, the assignment is not deterministic but probabilistic.

The next step is to generate control data for the printing device to print the phantom object using the print materials according to the print map. In other words, the printing map is used to generate the control data for controlling the printing device to print the phantom object according to the printing map.

The invention has the advantage that the printing material is assigned to the output voxels according to a probabilistic method. Because the grid of the printing map is denser than the grid of the parameter map of the source object, the probabilistic selection of the printer materials leads to a provision of the output parameter values in average even with the material parameter values being different from the output parameter values. The advantage of the use of the probabilistic method is that it avoids the state of the art use of dithering to provide the output parameter values. The dithering approaches according to the state of the art create material assignments in a region in a regular pattern. At boundaries between different output parameter values, the regular patterns of the different regions may cause noisy regions. The probabilistic method avoids these effects between regions of different structures.

According to a further embodiment of the present invention, the method comprises a step of receiving a material list comprising the printing materials to be used by the printing device to print the phantom object. A respective parameter value of the printing material is assigned to each printing material of the material list. In other words, the printing materials to print the phantom object are indicated by the material list. Each of the print materials has a corresponding parameter value. The parameter value may for example give the Hounsfield unit of the respective printing material. The material list is made available to the control device.

In a next step, the probability list, which describes the probabilities of the assignment of the respective printing materials to the respective parameter output values is generated by the control device. The probabilities are determined as a function of the respective print parameter values of the print materials. In other words, the print materials have the respect if they have print parameter values. The print materials can be used to provide the respective voxel of the respective output parameter value. As it is not possible to mix the print materials locally, a single one of the print materials has to be selected for the respective voxel, a probability to assign the respective print material to the respective voxel is given by the probability list.

According to a further embodiment of the present invention, the method comprises a step of receiving a parameter map of a printed phantom object. The parameter map comprises printed input voxels, each printed input voxel assigned a respective printed input parameter value, wherein the parameter map of the printed phantom object is linked to the probability list. In other words, the parameter map of the printed phantom object is provided to the control device. The printed phantom object may be printed by the printing device in accordance with the printing map generated based on the probability list. The print map generated on the basis of the probability list. In other words, the parameter map of the printed phantom object can be printed and analysed.

The next step is to compare the parameter map of the printed object with the parameter map of the source object. In other words, the parameter map describing the printed object that describes the source object is compared with the parameter map of the source object. The difference between the parameter map of the printed object and the parameter map of the source object should be as small as possible. A next step comprises updating the probability list based on differences between the input parameter values and the respective printed input parameter values to reduce the differences between the input parameter values and the printed parameter values. In other words, there may be differences between the input parameter values and the corresponding printed input parameter values which may be related to a selection of print materials according to the capability list. The probability list can be modified to reduce the differences between the input parameter values and the print parameter values.

According to a further embodiment of the present invention the generation of the parameter map of the phantom object comprises a predefined noise reduction procedure of the parameter map of the source object. In other words, the generation of the parameter map of the phantom object comprises a denoising of the parameter map of the source object. The noise reduction procedure may for example comprise an iterative reconstruction and/or median filtering procedure. The noise reduction procedure may be performed in an edge preserving fashion in order to avoid noise-in-printing, which may distort a noise power spectrum of the phantom object derived parameter map of the phantom object.

According to a further embodiment of the present invention, the generation of the parameter map of the phantom object comprises a resampling procedure. The resampling procedure may comprises a resampling and/or an initial reconstruction of the parameter map of the phantom object to a 3D isotropic resolution based on a relationship of a reconstruction kernel ρ10 and a slice thickness. The resampling procedure may comprise an oversampling of a realized matrix size to avoid loss effects from interpolation in the material mapping process. The resampling procedure may be configured to generate a 50% slice overlap.

According to a further embodiment of the present invention, the method comprises a step of clipping parameter input values of the parameter map above the highest print material parameter value to a predefined maximum print material parameter value, and clipping parameter input values of the parameter map below a lowest print material parameter value to a predefined minimum print material parameter value. In other words, the parameter map may comprise parameter input values which may be greater than the highest media parameter value. The corresponding parameter values are set to the predefined maximum material parameter value. The clipping parameter input values of the parameter map may also comprise parameter input values that are less than a lowest print material parameter value. The respective parameter input values are set to the predefined minimum printing material parameter value. The embodiment has the advantage that a range of parameter input values is limited to the printing material parameter values provided by the printing materials. A mapping of the output parameter values to the printing materials may follow a same formula as stated before. To determine the output parameter values based on the input parameter values, the input parameter values above the print material parameter value of a specific printing material may be clipped to the maximum print material parameter value. The input parameter values below the print material parameter value of a specific printing material may be clipped to the minimum print material parameter value.

According to a further embodiment of the present invention, the method comprises the step of assigning a predefined material to voxels whose parameter output values of the parameter map are below a lowest printing material parameter value. In other words, a further material is used for printing the phantom object. The respective material is used for voxels whose parameter output values are below the lowest printing material parameter value of the printing material of the probability list. The input parameter values below the print material parameter value of a specific printing material may assigned a separate printing material, which may be removed mechanically from the printed finished phantom after the print to represent air. The separate printing material may be used e.g. for accessible cavities like ear or nose if printing a head.

According to a further embodiment of the present invention, the method comprises a step of detecting a surface of the object in the parameter map. A next step comprises determining a distance value indicating a distance of the image voxel to the surface. In other words, the phantom object may have a surface which is an interface between the phantom object and the air. The surface is detected by the control device. For each of the image voxels, the respective distance value to the surface is determined. The method comprises a step of assigning a predefined surface material to voxels whose distance value satisfies a predefined condition. The predefined condition may comprise that the distance value of the respective voxels is below a predefined threshold value. It is possible that the print materials do not allow a stable surface to be created for the phantom object. To provide a stable surface, the predefined surface material is selected. The predefined surface material is used to create the surface. The mapping of the parameter map of the phantom object includes the process of detecting the transition of the outside typically air into the phantom object (soft tissue, skin) determining the surface of the parameter map of the phantom object. Derived from this information an additional mapping step to a separate the predefined surface material may be realized in combination with a "distance-to-surface" parameter, to enable the creation of a solid hull of the predefined surface material around the phantom object with desirable mechanical properties.

According to a further embodiment of the present invention, the method comprises the step of separating the parameter map of the phantom object into respective parameter maps of sub-objects of the phantom object. The sub-objects combine to form the phantom object. In other words, based on the source object, the sub-objects of the phantom object are generated. The phantom object may be created by a combination of the sub-objects. It may be that the size of the phantom object to be printed is limited by a maximum printable size according to the printer device. To allow printing of a larger phantom object, the phantom object is divided into the sub-objects, which may be printed in separate print processes by the printing device. The sub-objects are generated to allow the sub-objects to be joined to the phantom object. The printer may print the sub-objects. The sub-objects may be combined to form the phantom object. Printing full size phantom objects, e.g. head and neck with shoulders, may easily exceed the total size capabilities of the 3D printer device to be handled as a single object. Therefore, the mapping procedure may involve a repetition of the output parameter maps in regular intervals over the entire volume resulting in an artificially thick output parameter map for every e.g. 10 cm. This would allow the subsequent print to be performed in multiple pieces and in combination with mechanical surface grinding the combination of the pieces by gluing them together into the original isotropic 3D geometry.

According to a further embodiment of the present invention, the method comprises the step of identifying a predefined section in the parameter map of the source object by a section detection procedure. In other words, a predefined section is identified by the control device. The predefined section may, for example, relate to a particular structure. The control device may be configured to identify the structure using an image analysis method. The parameter map of the source object is restricted to the predefined section. The parameter map of the phantom object is generated based on the predefined section of the parameter map of the source object. The parameter map of the source object may be scaled in size, or a cut-out mask may be applied to the parameter map of the source object prior to the generation of the parameter map of the phantom object. This allows to limit the phantom object to a desired organ (e.g. heart out of a full thorax image set), which fits after scaling and masking into an artificial thorax phantom object built by conventional means, therefore creating a suitable phantom insert.

According to a further embodiment of the present invention, the method comprises the step of identifying a predefined section in the parameter map of the source object by a section detection procedure. A next step comprises replacing the predefined section with a predefined default section. In other words, it is possible that the predefined section is related to a specific object. The predefined section representing the object can be identified by the control device. In a next step, the control device may replace the predefined section with a default section of the object. It is possible that the predefined section is related to a tool of known dimensions. To allow a better representation of the object, the identified object is replaced by the object of known dimensions. The parameter map of the phantom object is generated based on the parameter map of the source object comprising the default section. It may be possible to replace small anatomical sections of the clinical input images with well-defined geometrical shapes. For example, a data set with contrast enhanced coronary vessels is "manipulated" in a way that an 2cm section of the vessel is replaced by a 3mm diameter cylinder with a fully geometrically defined stenosis of e.g. 50%. This hybrid phantom is desirable because it allows the application of Al trained algorithms which require human anatomy for vessel tracing and extraction and therefore a realistic phantom in combination with a fully predefined quantitative section with known diameter, vessel geometry and lesion volume or stenosis. It would be possible to base regulatory approval of imaging tools on this section because the ground truth is geometrically known a-priori with a very high precision. A similar example can be made for liver imaging with inserting spherical small diameter low contrast lesions in a clinical data set.

According to a further embodiment of the present invention, the input parameter values are translated into the output parameter values according to a predefined translation procedure, wherein the input parameter is different from the output parameter. In other words, the input parameter value and the output parameter value relate to values of different parameters. It is possible that the input parameter value describes a Hounsfield unit, wherein the output parameter is related to a T2 time. In other words, the mapping procedure may be applied cross modality. It may be possible to utilize a parameter map of the source object, generated by an MRI device as input for e.g. head images because a contrast of gray-white matter may be superior to a parameter map of the source object generated by a CT device. The mapping procedure may be aimed at CT sensitive / calibrated materials for providing the phantom object, that may be optimized for use in a CT device. The opposite direction could also be possible utilizing the capability of mapping high resolution isotropic CT images including bone onto materials optimized for MR imaging.

A second aspect of the present invention is related to a method of controlling a printer device. The method of controlling the printer device comprises steps of the method of providing control data for a printer device to generate a phantom object of a source object according to the first aspect of the present invention. The method further comprises a step of providing the control data to the printer device. The printer device is configured to print the phantom object.

For use cases or use situations which may arise in the methods and which are not explicitly described here, it may be provided that, in accordance with the methods, an error message and/or a prompt for user feedback is output and/or a default setting and/or a predetermined initial state is set.

A third aspect of the present invention is related to a control device. The control device is configured to perform a method according to the first aspect of the present invention and/or according to the second aspect of the present invention.

The control device is therefore configured to provide control data for a printer device to generate a phantom object of a source object.

The control device is configured to receive a parameter map of the source object. The parameter map comprises input voxels. Each input voxel is assigned a respective input parameter value. The control device is configured to generate a parameter map of the phantom object based on the parameter map of the source object. The parameter map of the phantom object comprising output voxels. Each output voxel is assigned a respective output parameter value. The control device is configured to generate a printing map of the phantom object, the printing map of the phantom object comprises the output voxels. Each output voxel is assigned a respective printing material to be applied by the printer device. The respective printing material is assigned to the respective output voxel according to a probabilistic procedure based on the output parameter value of the corresponding output voxel in the parameter map of the phantom object and a probability list. The probability list describes probabilities of the assignment of the respective printer materials to the respective parameter output value.

The control device is configured to generate the control data for the printer device to print the phantom object using the printing materials according to the printing map.

According to an alternative embodiment, the control device is configured to provide the control data to the printer device.

A fourth aspect of the present invention is related to printer device comprising a control device according to the third aspect of the present invention. The printer device is configured to print a phantom object according to control data provided to the printer device.

A fourth aspect of the invention is related to a computer program product comprising program code for performing a method according to the first aspect of the present invention and/or according to the second aspect of the present invention. The computer program product may also be regarded as a computer program.

A fifth aspect of the invention is related to a computer-readable storage medium comprising at least the computer program product according to the fourth aspect.

Independent of the grammatical term usage, individuals with male, female or other gender identities are included within the term.

The control device may comprise computing devices to perform steps of the methods.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more applicationspecific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
FIG 1 shows a schematic illustration of a method of providing control data for a printer device;
FIG 2 shows a schematic illustration of a method to calibrate the printer device;
FIG 3 shows a schematic illustration of a phantom object realized by the steps described above;
FIG 4 shows a schematic illustration of a progression of an input parameter value along the phantom object of FIG 3;
FIG 5 shows a schematic illustration of a progression of an input parameter value along the phantom object of FIG 3; and
FIG 6 shows a schematic illustration of a printing map of a phantom object.

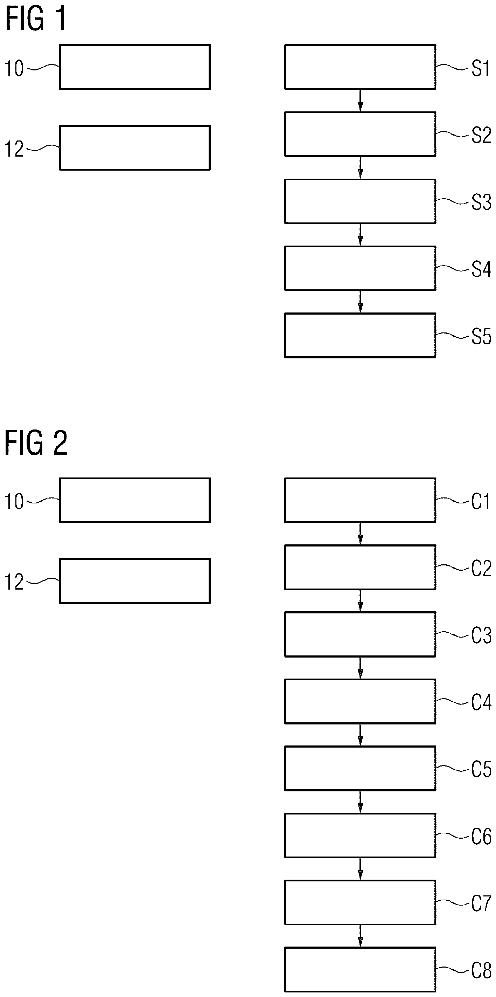

FIG 1 shows a schematic illustration of a method of providing control data for a printer device.

The method may be performed by a control device 10. An aim of the method may be a generation of a phantom object 14 of the source object.

A first step S1 of the method may comprise receiving a parameter map of a source object. The source object may be an organ. The parameter map may comprise input voxels, each input voxel being assigned a respective input parameter value. The parameter map of the source object may be a CT map of the source object, wherein the input parameter may be a Hounsfield unit. The input voxels may be arranged in an input grid. A density of the input grid may depend on a spatial resolution of an imaging device which generated the parameter map of the source object or which provided raw data for generating the parameter map of the source object.

A second step S2 may comprise generating a parameter map of the phantom object 14 based on the parameter map of the source object. It may be necessary to generate the parameter map of the phantom object 14 to provide a basis for generating a print map of the phantom object 14. The phantom object 14 may be the object to be generated by the printing device. The phantom object 14 should represent the source object. Therefore, the parameter map of the phantom object 14 is generated based on the parameter map of the source object. The parameter map of the phantom object 14 comprises output voxels 20, wherein each of the output voxels 20 may be assigned a respective output parameter value. The output parameter may also be a Hounsfield unit. The output voxels 20 may be arranged in an output grid. The output grid may be different from the input grid. The output grid of the output voxels 20 may be denser than the input grid of the input voxels. The density of the output grid may depend on a spatial resolution of the printer device 12. Each of the output voxels 20 may be assigned the corresponding output parameter value. The respective output parameter value may be defined in an interpolation procedure based on the input parameter values of the input voxels. The generation of the parameter map of the phantom object 14 may comprise a denoising of the parameter map of the source object prior to the generation of the parameter map of the phantom object 14 based on the source object.

A range of the input parameter values of the parameter map of the source object may cover subranges below a minimum parameter value of the printing materials. The range of the input parameter values may also cover a subrange above a maximum parameter value of the printing materials. Therefore, the printing materials may not be used to provide said input parameter values. To solve the problem, the method may comprise a step of clipping the range of the input parameter values to predefined values.

The generation of the parameter map of the phantom object 14 may comprise an identification of a predefined region of the parameter map of the source object, wherein the predefined region may relate to a specific sub-object of the source object. The parameter map of the phantom object 14 may be restricted to the region related to the sub-object. It may also be possible that the identified region is replaced by a predefined pattern. The parameter map of the phantom object 14 may also have a different image scale than the parameter map of the source object. It may be possible that a specific region is increased in size to generate the phantom object 14 of the respective sub object.

A third step S3 may comprise generating a printing map of the phantom object 14 based on the parameter map of the phantom object 14. The printing map of the phantom object 14 comprises the output voxels 20, wherein each output voxel 20 may comprise a respective printing material to be applied by the printing device in a printing process. The assignment of the respective printing material to the output may be carried out according to a predefined probabilistic procedure. The probabilistic procedure may use the output parameter value of the corresponding output voxel 20 and a probability list. The probability list may describe a probability that the respective print material is assigned to the output voxel 20 of the respective parameter output value.

The parameter map of the phantom object 14 may comprise output voxels 20 of an output parameter value below a predefined threshold value. A predefined material may be assigned to the respective output voxels 20. The respective output voxels 20 may be related to cavities of the phantom object 14. The material may be selected to provide stability in the cavities.

A surface of the phantom object 14 may be critical related to a stability of the phantom object 14. The control device 10 may identify a surface of the phantom object 14. The control device 10 may determine for each of the output voxels 20 a respective distance value describing a distance of the respective voxel to the surface. Based on the distance value, the control device 10 may assign a predefined surface material to the output voxels 20 having a distance value below a predefined threshold distance value.

A fourth step S4 of the method may comprise the generation of control data by the control device 10. The control data may be generated based on the printing map. The control data may comprise instructions for the printer device 12 to print the phantom object 14 using the printing materials according to the printing map.

A fifth step S5 may comprise a provision of the control data to the printer device 12 to control the printer device 12 to print the phantom object 14.

Fig. 2 shows a schematic illustration of a method to calibrate the printer device 12.

The method may be performed by a control device 10.

A first step of the method C1 may comprise a reception of a list of printing materials that may be provided by the printer device 12 to print the phantom object 14. Each of the printing materials may have a respective parameter value of the printing material.

In a second step C2, the control device 10 may generate a probability list. The probability list may describe the probabilities of an assignment of the respective printer materials to output voxels 20 of the respective parameter output values. The probabilities are determined based on the respective print parameter values of the printing materials. In other words, the control device 10 may generates a list for a range of the output parameter values. At the specific one of the output parameter values, the control device 10 describes the probability of the use of the respective printing materials for a voxel of the respective parameter output value.

A next step C3 comprises a reception of a parameter map of a source object. The source object may be a predefined source object configured to allow a calibration of the control device 10. The source object may be configured as a cuboid in which an input parameter value may decrease linearly along a longitudinal direction of the cuboid. The input parameter values of the cuboid may cover an input parameter value range from a minimum material parameter value to a maximum material parameter value.

The next steps C4 to C7 may correspond to the steps S2 to S5. Therefore after step C7 the printed phantom object 14 is available.

A next step C8 may comprise a reception of a parameter map of the printed phantom object 14. The parameter map of the printed phantom object 14 may be generated by an imaging device.

In a next step C9, the control device 10 may compare the parameter map of the printed phantom object 14 with the parameter map of the source object. In an ideal case, the input parameter values of the parameter map of the phantom object 14 are compatible with the input parameter values of the parameter map of the source object. However, there may be differences between these input parameter values that may be related to a difference between given material parameter values and real material parameter values and/or wrong probabilities in the probability list. The control device 10 may update the probability list based on the difference to minimize the difference between the input parameter values.

The updated probability list may be used by the control device 10 to generate control data to generate a phantom object 14 of a further source object.

The methods presented here may provide a detailed description for procedure comprising a printing map, which may include necessary steps for the calibration, the map process with boundary conditions derived from the available dynamic parameter range of the printer materials and as well as technical support solutions related to object cavities, and a phantom hull map.

Given a suitable 3D printer device the method described above allows the generation of highly realistic CT imaging phantom objects, which may depict an anatomy of a source object with high fidelity. The application of these kind of phantom objects are primarily in testing and quality control, because images derived from them can be successfully applied to imaging algorithms, which are trained on human anatomy and do not run on simple geometric objects (vessel segmentation, organ isolation, ...). It is also conceivable to utilize these kinds of phantom objects in clinical reader studies if the study would involve multiple acquisition at e.g. different dose level, which is typically prohibitive in CT due to the x-ray dose. It is also conceivable to validate imaging measurement tools (stenosis diameter, volume ...) in a software regulatory process, if one generates hybrids of human anatomy with locally inserted ground truth known geometrical objects as phantoms.

The following description is made for parameter maps configured as CT images, however an extension towards MR or other medical imaging modalities is naturally possible and the procedure applicable in a generalized fashion.

CT images represent attenuation values normalized to water ranging from -1000 HU (air) to 0 HU (water) up to a few thousand HU (metal / bone). The scale is continuous, and the actual CT number derives from combination material density and material x-ray attenuation coefficient. Typical CT values in clinical images acquired are -50 to -100 HU for fat, 50 HU to 150 HU for soft tissue, vessel enhanced by injected iodine contrast up to a few hundred HU and bone or calcium around 800HU to 1500 HU. A 3D printer can select (or assign) a single material Mₓ for each printed voxel from a list of n materials M₁ to Mₙ. It is not possible to mix materials on the printer voxel level. The mapping problem is therefore solved in a probabilistic manner by assigning each input CT value a probability to use either material Mₓ of Mₓ₊₁ as printer material on the printer voxel side. If the realized voxel resolution on the printer side is significantly higher compared to the CT system resolution one realizes average CT values from a partial volume combination of printed voxels with individual separate materials.

Determining the necessary CT value material probabilities as an initial calibration step: Each material M₁ to Mₙ can be measured individually as pure 100% material in a CT system yielding a CT value H₁ to Hₙ . Ordering these CT values in ascending order allows the assignment of a probability based on a linear behavior for material Mₓ of Mₓ₊₁ and CT values Hₓ of Hₓ₊₁ . This leads to the material probability pₓ (pₓ₊₁)for material Mₓ (Mₓ₊₁) for a CT value h between Hₓ and Hₓ₊₁ as: ${p}_{x} \left(h\right) = 1 - \left(h-{H}_{x}\right) / \left({H}_{x + 1}-{H}_{x}\right) and {p}_{x + 1} \left(h\right) = 1 - {p}_{x} \left(h\right)$

The entire function p(h) is evaluated piece-wise over the entire span H₁ of Hₙ. Based on this relationship a calibration phantom can be generated (e.g. block with size 3 x 3 x 8 cm), which realizes a continuous M₁ of M_{N} material gradient. Following printing, this calibration phantom is CT imaged and the realized CT values are evaluated at the individual phantom positions, which allows the generation of an updated CT value to material probability relationship.

In addition to the steps and the procedure the following extensions can be applied to the method in a generalized fashion:
The CT input images can be scaled in size, or a cut-out mask can be applied prior to the generation process. This allows to limit the target phantom to a desired organ (e.g. heart out of a full thorax image set), which fits after scaling and masking into an artificial thorax phantom built by conventional means, therefore creating a suitable phantom insert.

Printing full size CT phantoms (e.g. head and neck with shoulders) can easily exceed the total size capabilities of the 3D printer to be handled as a single object. Therefore, the mapping procedure can involve the repetition of the input CT images in regular intervals over the entire volume resulting in an artificially thick CT image for every e.g. 10 cm. This would allow the subsequent print to be performed in multiple pieces and in combination with mechanical surface binding the combination of the pieces by gluing them together into the original iso-tropic 3D geometry.

It is possible to replace small anatomical sections of the clinical input images with well-defined geometrical shapes. For example, a data set with contrast enhanced coronary vessels is "manipulated" in a way that a 2cm section of the vessel is replaced by a 3mm diameter cylinder with a fully geometrically defined stenosis of e.g. 50%. This hybrid phantom is desirable because it allows the application of Al trained algorithms which require human anatomy for vessel tracing and extraction and therefore a realistic phantom in combination with a fully predefined quantitative section with known diameter, vessel geometry and lesion volume or stenosis. It would be possible to base regulatory approval of imaging tools on this section because the ground truth is geometrically known a-priori with a very high precision. A similar example can be made for liver imaging with inserting spherical small diameter low contrast lesions in a clinical data set.

The mapping procedure can be applied cross modality. It is possible to utilize MR images as inputs for e.g. head images because the contrast of gray-white matter is superior to CT and still do the mapping procedure aimed at CT sensitive / calibrated materials for an optimized CT phantom. The opposite direction could also be possible utilizing the capability of mapping high resolution iso-tropic CT images including bone onto materials optimized for MR imaging.

Given a suitable 3D printer the procedure described above allows the generation of highly realistic CT imaging phantom, which depict the anatomy with high fidelity. The application of these kind of phantoms are primarily in testing and quality control, because images derived from them can be successfully applied to imaging algorithms, which are trained on human anatomy and do not run on simple geometric objects (vessel segmentation, organ isolation, ...). It is also conceivable to utilize these kinds of phantoms in clinical reader studies if the study would involve multiple acquisition at e.g. different dose level, which is typically prohibitive in CT due to the x-ray dose. It is also conceivable to validate imaging measurement tools (stenosis diameter, volume ... ) in a software regulatory process, if one generates hybrids of human anatomy with locally inserted ground truth known geometrical objects as phantoms.

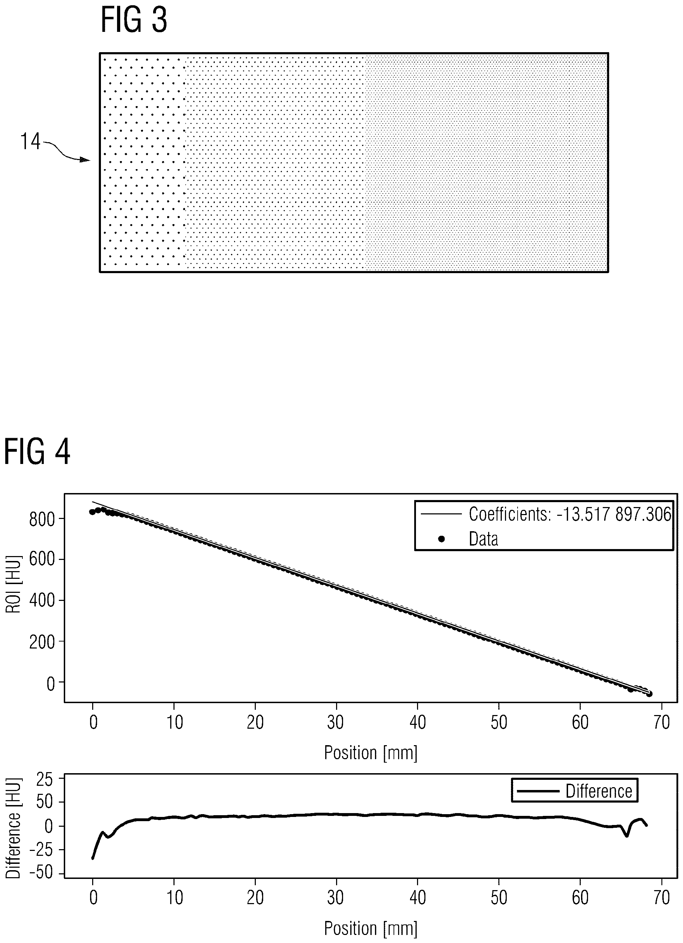

Fig. 3 shows a schematic illustration of a phantom object realized by the steps described above.

The phantom object 14 may be generated based on a source object designed as a calibration object. Fig. 3 may be a printing map of the phantom object 14. A material composition of the printing materials may change along a direction of the phantom object 14.

Fig. 4 shows a schematic illustration of a progression of an input parameter value along the phantom object 14 of Fig. 3.

The upper part of the illustration shows the progression of the Hounsfield unit value, measured by a first imaging device.

The lower part of the illustration shows a progression of the difference between the input parameter value in a parameter map of the printed phantom object 14 and the input parameter value in a parameter map of the source object.

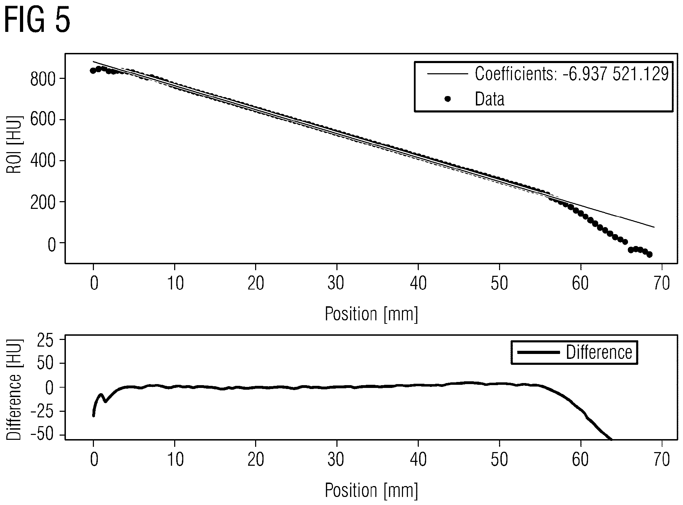

Fig. 5 shows a schematic illustration of a progression of an input parameter value along the phantom object 14 of Fig. 3.

The upper part of the illustration shows the progression of the Hounsfield unit value, measured by a second imaging device.

The lower part of the illustration shows a progression of the difference between the input parameter value in a parameter map of the printed phantom object 14 and the input parameter value in a parameter map of the source object. The second imaging device may provide an x-ray spectrum different from the x-ray spectrum of the first imaging device.

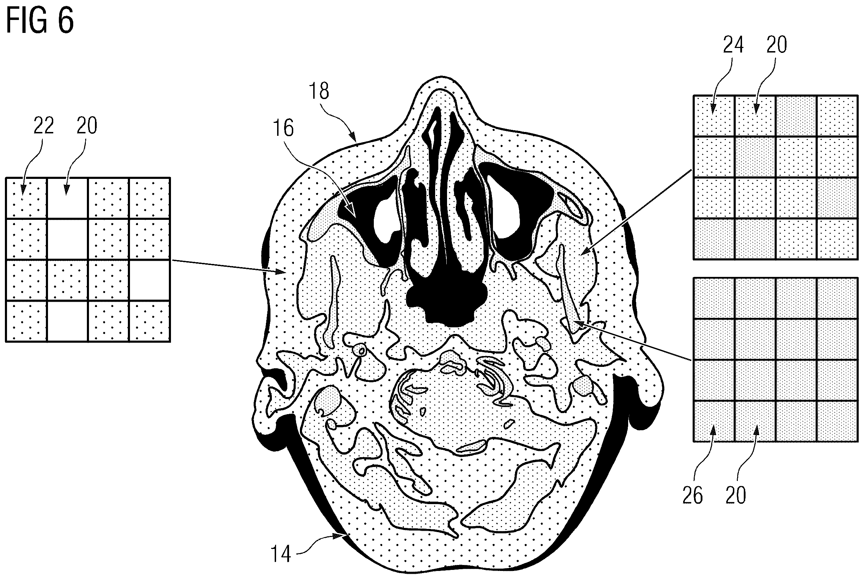

Fig. 6 shows a schematic illustration of a printing map of a phantom object 14.

The phantom object 14 may comprise different regions comprising respective output parameter values. According to the output parameter values and the probability list, the output voxels 20 may be assigned different printing materials. A region of a low output parameter value may be assigned a predefined printing material. The regions may be related to a cavity of the phantom object 14.

A surface region of the phantom object 14 may be assigned a defined surface material.

Region 22 is a small portion of an output grid comprising output voxels 20. The region 22 may have a size of an input voxel of an input grid. The input grid may be assigned a respective input parameter value. To provide the printing map, the parameter map of the phantom object 14 may be generated, wherein the grid size may depend on the resolution of the printer device 12. The output voxel 20 may be assigned a first printing material and a second printing material. A composition of the materials may correspond to the probability values in the probability list. The printing parameter values may average to the input parameter value.

Region 24 may be related to a point of a larger input parameter value, therefore the composition may change comprising material m2 and m3.

Region 26 may be related to a maximum input parameter value therefore a material of a maximum material parameter value may be assigned to each of the output voxels 20.

### List of Reference

10 control device
12 printer device
14 phantom object
16 region of a very low output parameter value
18 surface region
20 output voxel
22 region of a first material composition
24 region of a second material composition
26 region of a third material composition
S1-S5 steps
C1-C8 steps

## Claims

1. A method of generating control data for a printer device (12) to generate a phantom object (14) of a source object, comprising the following steps performed by a control device (10):
- receiving a parameter map of the source object, the parameter map comprising input voxels, each input voxel being assigned a respective input parameter value;
- generating a parameter map of the phantom object (14) based on the parameter map of the source object, the parameter map of the phantom object (14) comprising output voxels (20), each output voxel (20) being assigned a respective output parameter value;
- generating a printing map of the phantom object (14), the printing map of the phantom object (14) comprising the output voxels (20), each output voxel (20) being assigned a respective printing material to be applied by the printer device (12), wherein
the respective printing material is assigned to the respective output voxel (20) according to a probabilistic procedure based on the output parameter value of the corresponding output voxel (20) in the parameter map of the phantom object (14) and a probability list, which describes probabilities of the assignment of the respective printer materials to the respective parameter output value; and
- generating control data for the printer device (12) to print the phantom object (14) using the printing materials according to the printing map.

2. The method according to claim 1, comprising the following steps performed by the control device (10):
- receiving a material list of the printing materials of the printer device (12), each printing material being assigned a respective parameter value of the printing material;
- generating the probability list describing the probabilities of the assignment of the respective printer materials to the respective parameter output values, wherein the probabilities are determined as a function of respective print parameter values of the printing materials.

3. The method according to claim 2, comprising the following steps performed by the control device (10):
- receiving a parameter map of the printed phantom object (14), the parameter map comprising printed input voxels, each printed input voxel is assigned a respective printed input parameter value, wherein the parameter map of the printed phantom object (14) is linked to the probability list;
- comparing the parameter map of the printed object with the parameter map of the source object; and
- updating the probability list based on differences between the input parameter values and the respective printed input parameter values to reduce the differences between the input parameter values and the print parameter values.

4. The method according to any one of the preceding claims, wherein the step of generating the parameter map of the phantom object (14) comprises a predefined noise reduction procedure of the parameter map of the source object.

5. The method according to any one of the preceding claims, wherein the step of generating the parameter map of the phantom object (14) comprises a predefined resampling procedure.

6. The method according to any one of the preceding claims, wherein the step of generating the parameter map of the phantom object (14) comprises the following steps:
- clipping parameter input values of the parameter map of the source object above a highest printing material parameter value to a predefined maximum printing material parameter value; and
- clipping parameter input values of the parameter map of the source object below a lowest printing material parameter value to a predefined minimum printing material parameter value.

7. The method according to any one of the preceding claims, wherein the step of generating the printing map of the phantom object (14), comprising an assigning a predefined material to voxels whose parameter output values of the parameter map are below a lowest printing material parameter value.

8. The method according to any one of the preceding claims, wherein the step of generating the printing map of the phantom object (14) comprises the following steps:
- detecting a surface of the phantom object (14) in the parameter map of the phantom object (14);
- determining a distance value giving a distance of the output voxel (20) to the surface of the phantom object (14); and
- assigning a predefined surface material to output voxels (20) whose distance value satisfy a predefined condition.

9. The method according to any one of the preceding claims, wherein the step of generating the printing map of the phantom object (14), comprises separating the parameter map of the phantom object (14) into respective parameter maps of sub objects of the phantom object (14), wherein the sub objects combine to the phantom object (14).

10. The method according to any one of the preceding claims, wherein the step of generating the parameter map of the phantom object (14) comprises the following steps:
- identifying a predefined section in the parameter map of the source object by a section detection procedure;
- limiting the parameter map of the source object to the predefined section; and
- generating the parameter map of the phantom object (14) based on the predefined section of the parameter map of the source object.

11. The method according to any one of the preceding claims, wherein the step of generating the parameter map of the phantom object (14) comprises the following steps:
- identifying a predefined section in the parameter map of the source object by a section detection procedure;
- replacing the predefined section with a default section in parameter map of the source object; and
- generating the parameter map of the phantom object (14) based on the parameter map of the source object comprising the default section.

12. The method according to any one of the preceding claims, wherein the input parameter values are translated into the output parameter values according to a predefined translation procedure, wherein the input parameter is different from the output parameter.

13. A method of controlling a printer device (12), comprising the following steps performed by a control device (10):
- the steps of a method according to any one of the preceding claims; and
a step of providing the control data to a printer device (12) to print a phantom object (14) of the source object.

14. A control device (10) configured to perform a method of generating control data for a printer device (12) according to any one of the preceding claims 1 to 12 and/or configured to perform a method of controlling a printer device (12) according to claim 13.

15. A printer device (12), the printer device (12) comprising a control device (10) according to claim 14.

16. A computer program product comprising program code for performing a method according to any one of the preceding claims 1 to 12 and/or for performing a method of controlling a printer device (12) according to claim 13.

17. A computer-readable storage medium comprising at least the computer program product according to claim 16.
